# FASCICULE DE BREVET EUROPEEN

(11) **EP 1 106 883 B1**
(45) Date de publication et mention de la délivrance du brevet: **25.05.2005**
(21) Numéro de dépôt: 00403383.3
(22) Date de dépôt: 01.12.2000
(51) Int. Cl.: F16K 31/04, F16K 31/50, G05D 23/13

(54) **Dispositif thermostatique motorisé à élément thermostatique de sécurité**
Motorangetriebene Thermostatvorrichtung mit thermostatischer Sicherung
Motor driven thermostatic device with a thermostatic security element

(30) Priorité: 07.12.1999 FR 9915429
(43) Date de publication de la demande: 13.06.2001
(73) Titulaire: VERNET S.A., 91291 Arpajon Cédex (FR)
(72) Inventeur: Chamot, Jean-Pierre, 91290 Arpajon (FR); Le Clanche, Gérard Jean André, 91210 Draveil (FR)
(74) Mandataire: Jacobson, Claude

(56) Documents cités:
- FR-A- 2 703 730
- US-A- 4 453 668
- US-A- 4 550 693
- US-A- 5 970 996

## Description

L'invention concerne un dispositif thermostatique du type vanne à actionnement par moteur électrique, et comportant un élément thermostatique pouvant être un élément thermostatique conventionnel à cire dilatable pour lui assurer en outre un mode de fonctionnement de sécurité en cas de défaillance du moteur ou de son appareillage de commande.

Les dispositifs thermostatiques du type vanne sont utilisés notamment dans les circuits de refroidissement des moteurs à combustion interne en vue de régler la température du liquide de refroidissement introduit dans ce moteur pour en optimiser le fonctionnement, en agissant sur un débit de liquide dit « froid» provenant du radiateur de refroidissement du véhicule et/ou un débit de liquide dit « chaud » provenant du moteur, que l'on mélange pour constituer un liquide de refroidissement dit « tiède» que l'on réintroduit dans le moteur. On notera que les mots « froid », « chaud », et « tiède» sont utilisés dans un but de simplification du vocabulaire pour indiquer les niveaux relatifs des températures des trois courants de liquide lors du fonctionnement du dispositif en régime établi, mais qu'en fait ici les températures respectives de ces trois courants peuvent être très proches, et sont identiques quand le moteur est arrêté depuis quelque temps.

On connaît déjà, notamment par le brevet français publié sous le N° 2 703 730, des dispositifs thermostatiques motorisés au moyen d'un moteur électrique comportant un élément thermostatique de sécurité, permettant par exemple de mélanger dans une chambre du dispositif un courant de liquide froid au courant de liquide chaud même lorsque le moteur ou son appareillage de commande sont défaillants, si la température du liquide dans lequel baigne l'élément thermostatique dépasse une valeur souhaitée.

Le dispositif thermostatique de ce document 2 703 730 est motorisé au moyen d'un moteur électrique comportant un arbre de sortie rotatif actionnant, au moyen d'un accouplement à système vis-écrou conventionnel transformant le mouvement rotatif de l'arbre en mouvement de translation, l'obturateur mobile du dispositif thermostatique, à savoir un boisseau, dégageant progressivement un accès d'entrée de liquide froid de ce dispositif en même temps qu'il obture progressivement un accès d'entrée de liquide chaud, et inversement ; l'élément thermostatique de sécurité est aligné avec la vis du système vis-écrou et lorsque sa température s'élève, son piston exerce sur le boisseau, si celui-ci n'a pas été déplacé ou a été insuffisamment déplacé par le système vis-écrou, une force orientée dans le sens du dégagement de l'accès d'entrée de liquide froid et de l'obturation de l'accès d'entrée de liquide chaud ; afin que, sous la poussée du piston de l'élément thermostatique, le boisseau puisse effectivement se déplacer dans ce sens, l'accouplement à système vis-écrou est télescopique, et plus précisément monté coulissant sur l'arbre du moteur en étant sollicité par un ressort vers le boisseau dans le sens du dégagement de l'accès d'entrée de liquide chaud et de l'obturation de l'accès d'entrée de liquide froid; ainsi, quand l'élément thermostatique exerce sur le boisseau un effort en sens inverse supérieur à celui du ressort, pour obturer l'accès d'entrée de liquide chaud et dégager l'accès d'entrée de liquide froid, le ressort est comprimé par la rétraction du système vis-écrou et ainsi rien ne s'oppose à cette obturation et ce dégagement respectifs. Un inconvénient de ce dispositif est que lorsque la température du liquide dans lequel baigne l'élément thermostatique s'abaisse, le système vis-écrou suit le mouvement de rétraction de l'élément thermostatique, ce qui mène, puisque le moteur électrique ou son appareillage de commande est défaillant, a une nouvelle remontée de température, une nouvelle élongation de l'élément thermostatique, et a un fonctionnement qui a tendance à l'instabilité avec un liquide « tiède » à une température plus élevée que la température normale. En outre, l'élément thermostatique doit être relativement puissant pour vaincre l'effort résistant du ressort, et le système vis-écrou avec son montage télescopique à ressort est relativement volumineux ce qui ne permet pas de réduire autant qu'il serait souhaitable les dimensions du dispositif thermostatique.

L'invention a pour but de remédier à ces inconvénients et concerne à cette fin un dispositif thermostatique comportant un boîtier présentant une chambre comportant au moins deux accès de fluide dont au moins l'un est obturable par un obturateur, un moteur fixé au boîtier et muni d'un arbre de sortie mobile en rotation et à sens de rotation réversible relié mécaniquement à l'obturateur par un accouplement à système vis-écrou adapté pour actionner cet obturateur en translation sélectivement dans un sens où il obture progressivement l'accès obturable et dans un sens où il le dégage progressivement en fonction de la température d'un courant de fluide parcourant le dispositif détectée par un capteur, et un élément thermostatique de sécurité situé au moins partiellement dans le même courant de fluide et comportant une partie mobile adaptée pour actionner en translation l'obturateur lorsque par suite d'une défaillance celui-ci n'a pas été actionné par l'accouplement à système vis-écrou et la température dudit courant de fluide dépasse d'une valeur prédéterminée celle qui aurait dû provoquer un tel actionnement par le système vis-écrou, caractérisé en ce que le moteur est d'un type présentant au repos un couple résistant de manière à permettre le maintien d'une position de régulation, l'accouplement à système vis-écrou est substantiellement inélastique et le système vis-écrou est réversible afin qu'en cas d'actionnement en translation de l'obturateur par la partie mobile de l'élément thermostatique, le mouvement de translation soit transmis par l'obturateur au système vis-écrou et provoque une rotation du moteur.

Grâce à la réversibilité du système vis-écrou et du sens de rotation du moteur et à l'inélasticité en translation de l'accouplement, les déplacements de l'obturateur par l'élément thermostatique ne rencontrent qu'un faible effort résistant, et la rétraction de l'élément thermostatique ne provoque pas un retour élastique de l'obturateur à sa position initiale.

Le dispositif thermostatique peut en outre présenter une ou plusieurs des caractéristiques suivantes :
- le moteur est un moteur électrique d'un type qui est alimenté électriquement au repos pour présenter alors un couple résistant notablement supérieur à celui dû aux frottements, par exemple un moteur pas-à-pas ou un moteur sans collecteur dit « moteur brushless »,
- le moteur est un moteur pas-à-pas équipé de moyens de codage de position,
- la valeur prédéterminée est environ 5°C,
- il comporte un boîtier et une base fixés l'un à l'autre, la base comportant un conduit dans lequel débouche un accès de la chambre qui n'est pas obturable et où sont situés au moins partiellement un capteur et une partie fixe de l'élément thermostatique ;
- la chambre comporte deux accès obturables par un obturateur constitué par un boisseau actionné sélectivement dans un sens où il obture progressivement l'un des accès en dégageant progressivement l'autre et inversement ;
- il comporte en outre deux accès qui ne sont pas obturables par l'obturateur et qui sont en communication de manière permanente ;
- la chambre comporte deux accès dont l'un est obturable par un obturateur constitué par un clapet actionné sélectivement dans un sens où il obture progressivement l'un des accès et inversement ;
- il comporte un boîtier et une base fixés l'un à l'autre, la base comportant un conduit dans lequel débouche un accès de la chambre qui n'est pas obturable et dans la paroi latérale duquel débouche un accès supplémentaire qui n'est également pas obturable ;
- l'élément thermostatique comporte une coupelle à laquelle est solidarisé un clapet d'étanchéité de bipasse, et la base comporte intérieurement une chambre où débouche un accès de bipasse et qui est reliée à la région interne du conduit par un siège pour le clapet d'étanchéité de bipasse lequel est en position de plus grande ouverture quand l'obturateur est en position de fermeture et en position de fermeture quand le capteur détecte une température très élevée.

D'autres caractéristiques et avantages de l'invention ressortiront de la description qui va suivre de formes de réalisation de l'invention données à titre d'exemples non limitatifs, illustrées par les dessins joints dans lesquels :
- les figures 1 et 2 montrent schématiquement une première forme de réalisation du dispositif thermostatique selon l'invention respectivement dans un état dans lequel l'obturateur mobile du dispositif est soumis à l'action du moteur en l'absence de défaillance de celui-ci ou/et de son appareillage de commande, et dans un état dans lequel le moteur ou/et son appareillage étant défaillants, l'élément thermostatique de sécurité a pris le relais pour abaisser la température du fluide, par exemple un liquide, tiède,
- les figures 3 et 4 montrent schématiquement une deuxième forme de réalisation du dispositif thermostatique selon l'invention respectivement dans les deux mêmes états que sur les figures 1 et 2, et
- la figure 5 montre schématiquement une variante du dispositif des figures 3 et 4.

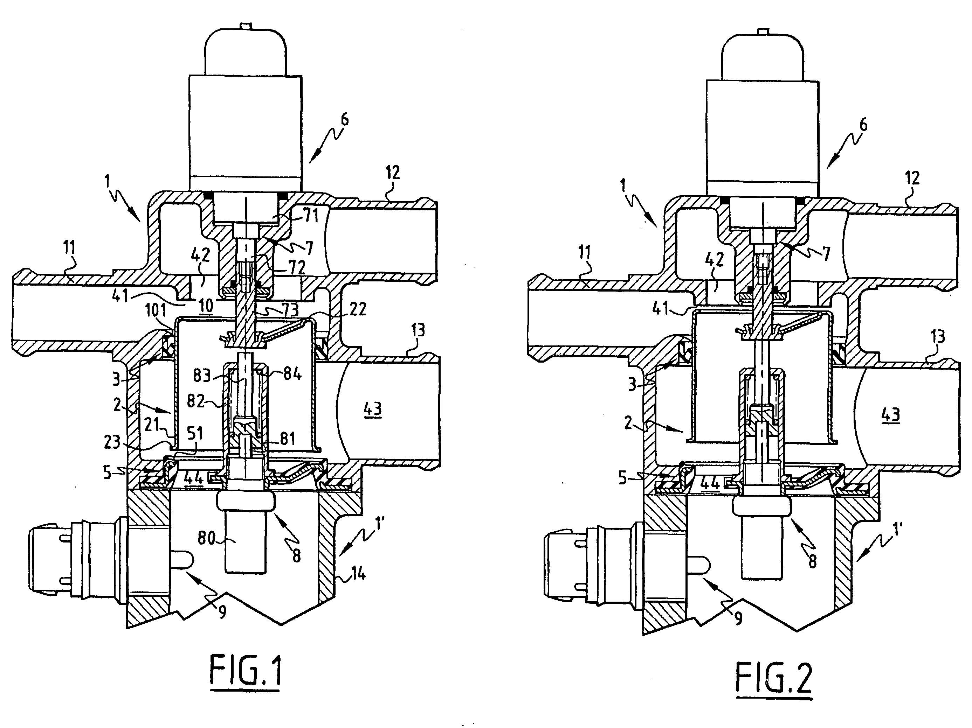

Le dispositif thermostatique représenté schématiquement sur les figures 1 et 2 est une vanne thermostatique à boisseau à quatre accès de fluide ou voies pouvant être des entrées ou des sorties de fluide en fonction du circuit hydraulique dans lequel ce dispositif est inséré.

Il comporte un boîtier 1 présentant une chambre 10 dans laquelle est monté coulissant un obturateur 2 constitué par un boisseau creux comprenant une jupe 21 de forme générale cylindrique et à une extrémité de cette jupe un fond ajouré 22 dont le rôle sera exposé plus loin tandis que l'extrémité opposée de la jupe est munie d'un évasement en forme de disque annulaire plan 23.

Le boisseau est guidé dans son mouvement de coulissement le long de l'axe central longitudinal de sa jupe cylindrique, par une partie de paroi cylindrique 101 de la chambre avec interposition d'un joint d'étanchéité 3 ; cette partie de paroi cylindrique 101 entoure le boisseau 2 à proximité de son fond ajouré 22.

Dans la paroi de la région de la chambre 10 extérieure à la jupe, du côté du fond ajouré 22, débouche un premier accès 41 de fluide dans la partie latérale de cette paroi, et un deuxième accès 42 de fluide centré sur l'axe central longitudinal de la jupe dans la partie de fond de la paroi placée en vis-à-vis du fond ajouré 22 ; le premier accès 41 de fluide est donc obturable par la jupe du boisseau progressivement depuis une position du boisseau dans laquelle son fond 22 affleure l'accès 41 jusqu'à une position dans laquelle ce fond ajouré 22 vient en butée contre la partie de fond de la paroi de la chambre où débouche le deuxième accès 42 (ici sans obturer ce dernier), et dégageable progressivement en sens inverse.

Dans la partie latérale de la paroi de la chambre 10 extérieure à la jupe qui est en vis-à-vis de cette dernière lorsque le premier accès 41 est complètement dégagé, débouche un troisième accès 43 de fluide qui est donc complètement obturé par la jupe quand le premier accès 41 est complètement dégagé, et qui est progressivement dégagé par elle quand ce premier accès est progressivement obturé (et inversement).

Enfin, dans la paroi de la région de la chambre 10 intérieure à la jupe qui est opposée à celle qui comporte le deuxième accès 42, débouche un quatrième accès 44 centré sur l'axe longitudinal de la jupe et qui n'est pas obturable par celle-ci.

Le premier accès 41 et le troisième accès 43 qui sont obturables par la jupe 21 sont des orifices d'extrémités de conduits 11, 13 en une seule pièce avec le boîtier 1 et qui s'étendent en direction radiale par rapport à la jupe, en partant de la paroi latérale de la chambre. Le deuxième accès 42 est un orifice d'extrémité d'un conduit coudé 12 dont la partie située au-delà du coude en partant du deuxième accès s'étend dans la même direction que le deuxième conduit 12 mais ici en sens opposé. Le quatrième accès 44 de la chambre 10 débouche directement, le boîtier 1 étant prévu pour être fixé à une base 1' de boîtier à laquelle le boîtier 1 peut être fixé par des vis traversant des brides respectives du boîtier 1 et de la base 1' ; ici, la chambre 10 est donc prolongée, au-delà du quatrième accès 44, par un conduit 14 appartenant à la base 1', s'étendant dans la direction de l'axe central longitudinal de la jupe 21.

Un siège 5 de boisseau, ajouré pour des raisons qui seront exposées plus loin, s'étendant dans le quatrième accès 44, est pincé entre le boîtier 1 et la base 1' ; une partie de ce siège 5, s'étendant annulairement dans le quatrième accès 44, présente une face annulaire 51 tournée vers l'intérieur de la chambre et plus précisément vers le fond ajouré 22 de la jupe, cette face 51 servant d'appui à l'évasement 23 en forme de disque de la jupe du boisseau.

Pour actionner le boisseau 2 en translation sélectivement dans un sens ou dans l'autre le long de l'axe central longitudinal de la jupe 21, un actionneur 6 est fixé au boîtier et plus précisément à la paroi latérale du deuxième conduit 12. Cet actionneur est constitué par un moteur électrique 6 muni d'un arbre de sortie mobile en rotation et à sens de rotation réversible, du type pas-à-pas ou du type sans collecteur connu sous le nom de « moteur brushless » ou encore d'un autre type qui étant alimenté électriquement au repos présente alors un couple résistant notablement supérieur à celui dû aux frottements de manière à permettre le maintien d'une position de régulation, portant un accouplement mécanique 7 de liaison de l'arbre de sortie au boisseau, cet accouplement 7 comportant un système vis-écrou 71 (dont le détail n'est pas représenté sur les figures) lui-même réversible. Dans le cas d'un moteur pas-à-pas, avantageusement, on peut choisir un moteur équipé de moyens de codage de position permettant le repérage des amplitudes des mouvements effectués.

Au moyen du système vis-écrou 71, le mouvement rotatif pas-à-pas de l'arbre de sortie du moteur 6 est transformé en un mouvement de translation pas-à-pas d'un piston de sortie 72 du système vis-écrou.

L'extrémité libre du piston de sortie 72 est vissée dans une extrémité d'un arbre 73 de commande de l'obturateur 2, débouchant dans la chambre 10 et dont l'extrémité opposée est fixée à la région centrale du fond 22 de l'obturateur.

A cette fin, ce fond 22 comporte un trou central dans lequel est encliqueté l'arbre de commande 73 ; la matière entourant le trou central est reliée à la jupe par un ou plusieurs ponts de matière s'étendant dans des plans radiaux de la jupe 21, entre lesquels sont définis des ajours ou déjours destinés à permettre les transferts de fluide entre le deuxième accès 42 et le quatrième accès 44 de la chambre 10 en toutes circonstances ; on notera que l'accouplement mécanique 7 s'étendant de l'arbre de sortie rotatif du moteur 6 au fond du boisseau 2 n'est pas rétractable élastiquement, sa rétraction n'étant possible que par suite de la réversibilité du système vis-écrou sans retour élastique vers une position plus en extension.

Le dispositif thermostatique porte en outre un élément thermostatique 8 de sécurité à cire dilatable indépendant, et à cette fin, de la même manière, le siège 5 pour le boisseau 2 comporte un disque central percé d'un trou central dans lequel est fixé l'élément thermostatique 8 ; le disque central est relié à la partie annulaire du siège 5 par un ou plusieurs ponts de matière s'étendant le long de plans radiaux par rapport à la jupe 21, entre lesquels sont définis des ajours ou déjours destinés à permettre les transferts du fluide entre le quatrième accès 44 et la chambre 10. Une partie de l'élément thermostatique 8, ici sa coupelle 80 contenant la cire, est placée directement et maintenue fixe dans le conduit 14 s'étendant dans la base 1' donc dans le courant de fluide parcourant ce conduit 14.

Une autre partie de l'élément thermostatique 8, comprenant son piston 81, est logée dans une bride 82 de forme générale cylindrique fixée à la partie fixe de l'élément thermostatique et s'étendant à l'intérieur de la jupe 21 comme le piston 81 en direction de l'extrémité de l'arbre de commande 73 fixée dans le fond 22 du boisseau ; le piston 81 constituant ici la partie mobile de l'élément thermostatique étant relativement court, est prolongé à l'intérieur de la bride 82 par un axe de manoeuvre 83 adapté pour s'étendre en saillie hors de l'extrémité libre de la bride 82 lorsque la température du fluide dans le conduit 14 est supérieure à une température prédéterminée.

L'axe de manoeuvre 83 comporte, du côté de la partie fixe de l'élément thermostatique, une embase soumise à l'action d'un ressort de rappel 84 hélicoïdal comprimé entre cette embase et la face interne de l'extrémité libre de la bride 82 ; ainsi, lorsque la température du courant de fluide dans lequel baigne la coupelle de l'élément thermostatique baisse après une élongation du piston 81 et de l'axe de manoeuvre 83, l'axe 83 et le piston 81 sont rappelés en position rétractée.

De plus, un capteur de température 9 s'étendant en saillie dans le conduit 34 de la base 1' à proximité de la coupelle de l'élément thermostatique est porté par la paroi latérale de ce conduit ; la fonction de ce capteur est de détecter la température du courant de fluide dans ce conduit, et de transmettre en réponse un signal électrique de température détectée à un calculateur (non représenté) pilotant le moteur 6. Le calculateur recevant ce signal de température détectée pilote le moteur 6 afin que celui-ci actionne le boisseau 2, soit proportionnellement à l'écart entre le signal de température détectée et un signal de consigne de température qu'il génère compte tenu par exemple de conditions de roulage, donc proportionnellement à l'écart entre la température détectée et la température de consigne, soit en fonction d'un autre algorithme choisi non proportionnel.

Ainsi, l'arbre de sortie du moteur 6 est actionné en rotation dans un sens ou dans l'autre en fonction du sens des variations de température du fluide dans le conduit 14 de la base 1' détectées par le capteur 9 et déplace, proportionnellement à l'écart entre les températures ou en fonction d'un autre algorithme, le boisseau 2 en translation dans un sens ou dans l'autre par l'intermédiaire de l'accouplement mécanique 7 inélastique à système vis-écrou réversible.

Dans le cas d'une élévation de température, le mouvement de l'accouplement 7 est une rétraction qui provoque progressivement une obturation du premier accès 41 et un dégagement du troisième accès 43 ; dans le cas d'une diminution de température, le mouvement de l'accouplement 7 est une extension qui provoque progressivement un dégagement du premier accès 41 et une obturation du troisième accès 43.

Dans l'hypothèse où le moteur 6, le capteur 9 ou le calculateur, ou tout autre élément de la chaîne de pilotage situé entre le capteur et le moteur connaît une défaillance et où ainsi le boisseau 2 n'est pas actionné en translation dans le sens de l'obturation du premier accès 11 et du dégagement du troisième accès 43 alors qu'il aurait dû l'être compte tenu de la température du fluide, la partie mobile de l'élément thermostatique (c'est-à-dire ici son piston) qui s'étend également et se rétracte au gré respectivement des élévations et des diminutions de température dans le conduit 14 de la base 1', prend le relais du moteur 6 pour actionner en translation le boisseau dès que la température du courant du fluide dépasse d'une valeur prédéterminée, par exemple de 5°C, celle qui aurait dû provoquer l'actionnement par la chaîne d'actionnement normal comprenant le système vis-écrou (figure 2). Comme l'accouplement 7 est inélastique et le système vis-écrou 71 est réversible, le mouvement de translation du boisseau 2 communiqué à l'arbre de commande 73 provoque par l'intermédiaire du système vis-écrou 71, une rotation du moteur correspondant au seuil près ici de 5°C, à la rotation que le moteur aurait dû effectuer ; en outre, le boisseau 2 reste dans la même position même en cas de refroidissement de l'élément thermostatique.

On peut noter qu'alors les modes de régulation prescrits par le calculateur ne sont plus conformes aux exigences, et que l'on peut alors créer des signaux d'indication de défaillance.

On peut également noter que la valeur du seuil de température déclenchant l'intervention de l'élément thermostatique 8 est déterminée par les caractéristiques des deux chaînes d'actionnement du boisseau 2 (celle comprenant le moteur et celle comportant l'élément thermostatique), et également par la distance séparant en fonctionnement normal l'extrémité libre de l'axe de manoeuvre 83 de celle de l'arbre de commande 73.

Dans un circuit de refroidissement de moteur à combustion interne, par exemple de véhicule, différentes configurations sont possibles.

Dans une première configuration, la sortie du moteur à combustion interne est reliée à l'entrée d'un radiateur de refroidissement et à celle de différents appareillages tels qu'un aérotherme, un échangeur d'huile de boîte de vitesses et un échangeur d'huile de moteur, et le premier accès 41 est relié à la ligne de liaison entre d'une part le radiateur et d'autre part le moteur et ces appareillages ; c'est alors une entrée de fluide chaud. Le deuxième accès 42 est relié à la sortie des appareillages cités plus haut et c'est alors une entrée de fluide moins chaud. Le troisième accès 43 est relié à la sortie du radiateur et c'est une entrée de fluide froid. Le quatrième accès 44 est relié à l'entrée du moteur par l'intermédiaire d'une pompe de circulation et est une sortie de fluide pouvant être à la température du fluide sortant du moteur ou du fluide sortant du radiateur, ou à une température inférieure selon que l'obturateur ouvre complètement le premier accès et ferme le troisième, ou ferme le premier accès, ou occupe une position intermédiaire, en fonction de l'algorithme du calculateur, ici le calculateur de bord du véhicule.

Dans une deuxième configuration, la sortie du moteur à combustion interne est reliée au quatrième accès 44 et celui-ci est une entrée de fluide chaud ; le troisième accès 43 est relié à l'entrée du radiateur de refroidissement et c'est une sortie de fluide chaud puisqu'il est toujours plus ou moins en communication avec le quatrième accès ; le premier accès 41 est relié à l'entrée du moteur par l'intermédiaire de la pompe, et c'est donc une sortie qui, quand cet accès n'est pas obturé, est une sortie de fluide chaud ; le deuxième accès 42 est relié à l'entrée des autres appareils déjà cités et est une sortie de fluide chaud car elle est toujours en communication avec le quatrième accès ; la sortie du radiateur et celle des autres appareils est reliée également à l'entrée du moteur par l'intermédiaire de la pompe. Dans ce cas, le dispositif thermostatique n'assure pas une fonction de mitigeur, mais répartit le fluide chaud d'entrée entre le moteur, le radiateur et les autres appareils, afin que le moteur reçoive du fluide de refroidissement à la température appropriée.

Dans les deux cas, des moyens appropriés sont prévus pour vérifier que le dispositif thermostatique est « ouvert» (premier accès 41 dégagé) lors des démarrages du moteur à froid.

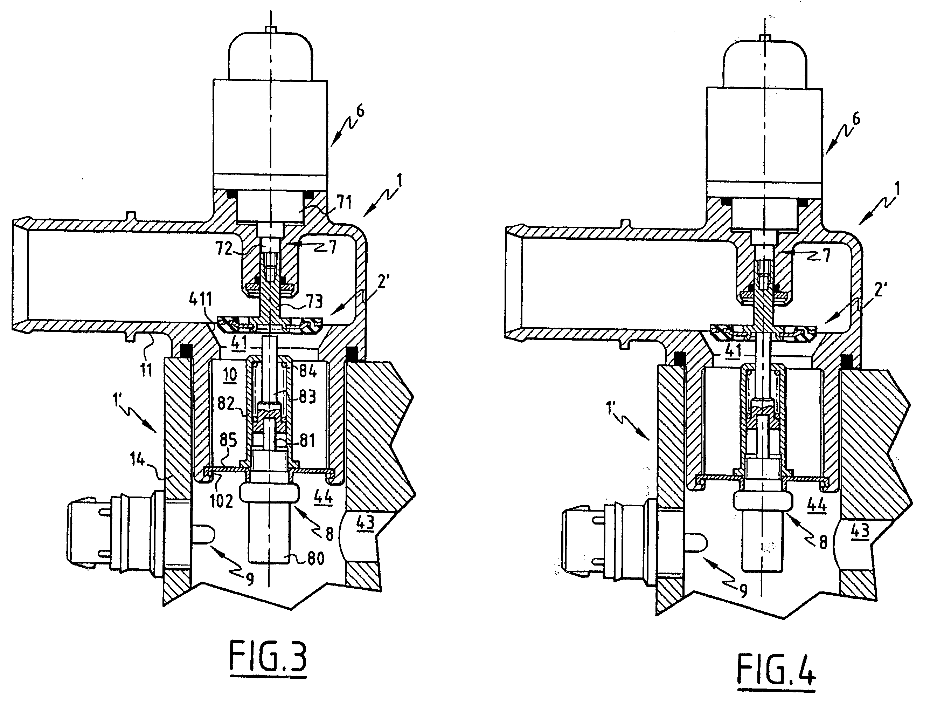

Le dispositif thermostatique représenté schématiquement sur les figures 3 et 4 est une vanne thermostatique à clapet à trois accès de fluide ou voies pouvant être des entrées ou des sorties de fluide en fonction du circuit hydraulique dans lequel le dispositif est inséré.

Sur les figures 3 et 4 et dans la suite du texte, les éléments correspondant à l'identique ou approximativement à des éléments des figures 1 et 2 et de la partie précédente de la description, portent les mêmes références numériques.

Ce dispositif thermostatique comporte un boîtier 1 présentant une chambre 10 de forme générale cylindrique et un obturateur 2' monté coulissant dans le boîtier et constitué par un clapet.

La chambre 10 comporte un premier accès 41 obturable par le clapet 2' et à cette fin présentant un siège tronconique 411 évasé vers l'extérieur de la chambre en vue de servir d'appui à la paroi latérale du clapet ; ce premier accès 41 s'étend dans une paroi de fond de la chambre 10 et est centré sur l'axe central longitudinal de celle-ci ; il est obturable par le clapet progressivement depuis une position du clapet dans laquelle celui-ci est éloigné du siège 411 jusqu'à une position dans laquelle il est en appui sur le siège, et dégageable progressivement en sens inverse.

A son extrémité opposée à celle dans laquelle s'étend le premier accès 41, la chambre présente un autre accès 44 également centré sur l'axe central longitudinal de la chambre, et qui n'est pas obturable.

Le boîtier 1 est prévu pour être fixé à une base 1' de boîtier à laquelle le boîtier peut être fixé par des vis traversant des brides respectives du boîtier 1 et de la base 1' ; la chambre 10, dont la paroi latérale est logée sur au moins une partie de sa longueur dans la base 1', est donc prolongée, au-delà dudit autre accès 44, par un conduit 14 s'étendant dans la base 1' dans la direction de l'axe central longitudinal de la chambre 10. Dans la paroi latérale de ce conduit 14, débouche un accès supplémentaire 43 qui également n'est pas obturable.

Le premier accès 41 est un orifice s'étendant dans la partie latérale de la paroi d'un conduit 11 en une seule pièce avec le boîtier et qui s'étend en direction radiale par rapport à la chambre 10 de l'autre côté du clapet 2'.

Pour actionner le clapet 2' en translation sélectivement dans un sens ou dans l'autre le long du prolongement de l'axe central longitudinal de la chambre 10, un actionneur à moteur 6 est fixé au boîtier et plus précisément à la paroi latérale du conduit 11 débouchant dans la chambre par l'accès obturable 41.

Comme ce moteur 6 et son accouplement 7 le reliant à l'obturateur 2' sont ici identiques à ceux de la forme de réalisation représentée sur les figures 1 et 2, leur description ne sera pas répétée ; simplement, l'arbre de commande 73 est fixé à la région centrale d'un clapet 2' au lieu d'être fixé à la région centrale du fond d'un boisseau.

A cette fin, le clapet 2' comporte un trou central dans lequel est encliqueté l'arbre de commande 73.

Ce dispositif thermostatique comporte également en outre un élément thermostatique 8 de sécurité à cire dilatable indépendant ; afin de porter cet élément thermostatique 8, la surface interne de la région de la paroi latérale de la chambre 10 qui est proche de l'accès 44 qui débouche dans le conduit 14 de la base 1', présente une gorge annulaire 102 dans laquelle sont encliquetées les extrémités d'un pontet 85 s'étendant diamétralement dans la chambre et percé d'un trou central dans lequel est fixé l'élément thermostatique 8.

Comme précédemment, une partie de l'élément thermostatique 8, à savoir sa coupelle 80 contenant la cire, est placée directement et maintenue fixe dans le conduit 14 s'étendant dans la base 1' donc dans le courant de fluide parcourant ce conduit 14. Le montage de l'élément thermostatique 8 étant identique à celui de la forme de réalisation précédemment décrite, sa description ne sera pas répétée.

Egalement comme dans la forme de réalisation précédemment décrite, un capteur de température 9 s'étendant en saillie dans le conduit 14 de la base 1' à proximité immédiate de la coupelle de l'élément thermostatique est porté par la paroi latérale de conduit ; ce capteur est ici approximativement en vis-à-vis de l'accès supplémentaire 43 ; la fonction de ce capteur est identique à celle du capteur de la forme de réalisation précédente.

Ainsi, l'arbre de sortie du moteur 6 est actionné en rotation dans un sens ou dans l'autre en fonction du sens des variations de température du fluide dans le conduit 14 de la base 1' détectées par le capteur 9 et déplace, proportionnellement à l'écart entre température détectée et température de consigne ou en fonction d'un autre algorithme, le clapet 2' en translation dans un sens ou dans l'autre par l'intermédiaire de l'accouplement mécanique 7 inélastique à système vis-écrou réversible.

Dans le cas d'une élévation de température, le mouvement de l'accouplement 7 est une rétraction qui provoque progressivement un dégagement du premier accès 41 ; dans le cas d'une diminution de température, le mouvement de l'accouplement 7 est une dilatation qui provoque progressivement une obturation du premier accès 41.

Dans l'hypothèse où le moteur 6, le capteur 9, ou le calculateur ou tout autre élément de la chaîne de pilotage situé entre le capteur et le moteur connaît une défaillance et où ainsi le clapet 2' n'est pas actionné en translation dans le sens du dégagement du premier accès 41 alors qu'il aurait dû l'être compte tenu de la température du fluide, la partie mobile de l'élément thermostatique (c'est-à-dire son piston) qui s'étend également et se rétracte au gré respectivement des élévations et des diminutions de température dans le conduit 14 de la base 1', prend le relais du moteur 6 pour actionner en translation le clapet dès que la température du courant de fluide dépasse d'un seuil prédéterminé, par exemple de 5°C, celle qui aurait dû provoquer l'actionnement par la chaîne d'actionnement normal comprenant le système vis-écrou (figure 4). Comme l'accouplement 7 est inélastique et le support vis-écrou 71 est réversible, le mouvement de translation du clapet 2' communiqué à l'arbre de commande 73 provoque par l'intermédiaire du système vis-écrou 71, une rotation du moteur correspondant au seuil près ici de 5°C, à la rotation que le moteur aurait dû effectuer; le clapet 2' reste dans la même position même en cas de refroidissement de l'élément thermostatique.

Le clapet 2' ne se refermant plus, les modes de régulation prescrits par le calculateur ne sont plus conformes aux exigences, et on peut alors créer des signaux d'indication de défaillance.

La valeur du seuil de température déclenchant l'intervention de l'élément thermostatique 8 est déterminée par les caractéristiques des deux chaînes d'actionnement du clapet 2' (celle comprenant le moteur et celle comportant l'élément thermostatique), et également par la distance séparant en fonctionnement normal l'extrémité libre de l'axe de manoeuvre 83 de celle de l'arbre de commande 73.

Dans un circuit de refroidissement de moteur à combustion interne par exemple de véhicule, différentes configurations sont possibles.

Dans une première configuration, la sortie du moteur à combustion interne est reliée à l'entrée d'un radiateur de refroidissement et à celle de différents appareillages tels qu'un aérotherme, un échangeur d'huile de boîte de vitesses et un échangeur d'huile de moteur, et l'accès supplémentaire 43 est relié à la ligne de liaison de ces éléments ; c'est donc un accès d'entrée de liquide chaud. Le premier accès 41 est relié à la sortie du radiateur, et c'est donc un accès d'entrée de liquide froid. L'autre accès 44 est relié à l'entrée du moteur par l'intermédiaire d'une pompe de circulation et c'est donc un accès de sortie de liquide chaud ou tiède selon que le premier accès 41 est obturé ou non en fonction de l'algorithme du calculateur. La sortie de l'aérotherme et des échangeurs est également reliée à une (autre) entrée de la pompe de circulation.

Dans une deuxième configuration, la sortie du moteur à combustion interne est reliée à l'entrée de l'aérotherme et des échangeurs, ainsi qu'à l'accès supplémentaire 43 ; c'est donc un accès d'entrée de liquide chaud. Le premier accès 41 est relié à l'entrée du radiateur, et c'est donc un accès de sortie de liquide chaud. L'autre accès 44 est relié à l'entrée du moteur par l'intermédiaire de la pompe, et c'est donc une sortie de liquide chaud ; la sortie du radiateur est reliée à la même entrée de la pompe pour lui apporter du liquide froid. La sortie de l'aérotherme et des échangeurs est reliée à une autre entrée de la pompe. Dans ce cas encore, le dispositif thermostatique n'assure donc pas lui-même une fonction de mitigeur, mais répartit le fluide chaud d'entrée entre le moteur et le radiateur afin que le moteur reçoive du fluide de refroidissement à la température appropriée.

Dans ces deux cas également, des moyens appropriés permettent de vérifier que le dispositif thermostatique est « ouvert » lors des démarrages du moteur froid.

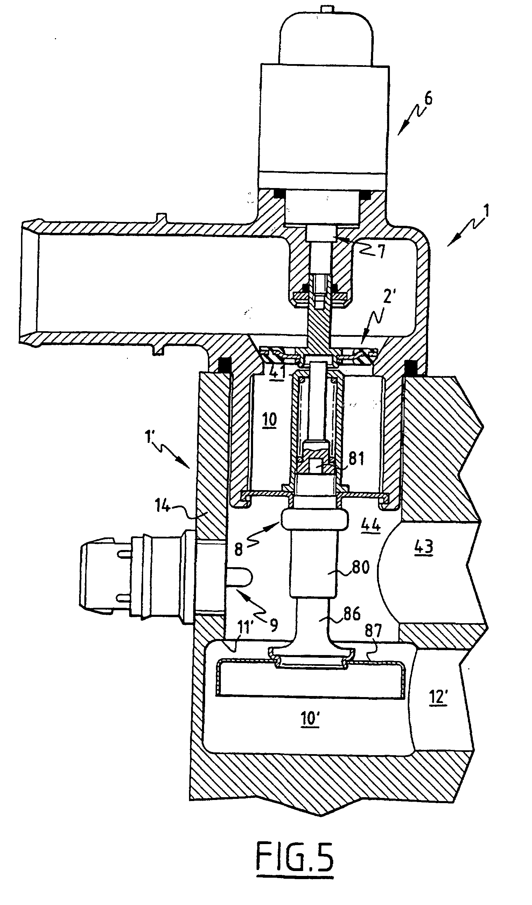

Le dispositif thermostatique représenté schématiquement sur la figure 5 est une vanne thermostatique à clapet plat identique au dispositif des figures 3 et 4 à part le fait qu'elle permet en outre d'assurer une fonction bipasse ; aussi, on ne décrira que ses organes supplémentaires par rapport au dispositif des figures 3 et 4, les organes communs étant repérés sur la figure par les mêmes références numériques. Dans cette variante du dispositif des figures 3 et 4, la base 1' comporte intérieurement, à l'opposé de sa face d'appui pour le boîtier 1 et au-delà du capteur 9 et de l'accès supplémentaire 43 lorsque l'on s'éloigne de cette face d'appui, une chambre 10' dans l'alignement de la chambre 10 du boîtier 1 et de plus grande section transversale que celle de la région interne du conduit 14 dans laquelle est logée la paroi latérale de cette chambre 10, afin de s'y racorder par un épaulement. Par ailleurs, la coupelle 80 de l'élément thermostatique 8 est prolongée à l'opposé du piston 81 par un pied 86 auquel est fixé un clapet d'étanchéité de bipasse 87 en forme de cuvette de plus grande section transversale que la région interne du conduit 14 dans laquelle est logée la paroi latérale de la chambre 10 du boîtier 1 et dont le fond est du côté de l'épaulement afin que ce dernier constitue le siège 11' du clapet 87. Dans la chambre 10' de la base 1', débouche naturellement un accès de bipasse 12'. Avec ce montage, le clapet 87 d'étanchéité de bipasse est bien entendu en position de plus grande ouverture quand l'obturateur 2' est en position de fermeture, et en position de fermeture quand le capteur 9 détecte une température très élevée.

Bien entendu, l'invention n'est pas limitée aux formes de réalisation ci-dessus décrites et représentées, et on pourra en prévoir d'autres sans sortir de son cadre, notamment des formes de réalisation adaptées pour d'autres applications, par exemple dans des circuits de circulation d'huile ou de circulation de carburant de véhicules, ou encore des circuits de chauffage ou toute autre application comportant un circuit dans lequel circule un fluide devant être réglé en température.

## Revendications

1. Dispositif thermostatique comportant un boîtier (1) présentant une chambre (10) comportant au moins deux accès (41, 42, 43, 44 ; 41, 44) de fluide dont au moins l'un est obturable par un obturateur (2 ; 2'), un moteur (6) fixé au boîtier et muni d'un arbre de sortie mobile en rotation et à sens de rotation réversible relié mécaniquement à l'obturateur par un accouplement (7) à système vis-écrou (71) adapté pour actionner cet obturateur en translation sélectivement dans un sens où il obture progressivement l'accès obturable (41) et dans un sens où il le dégage progressivement en fonction de la température d'un courant de fluide parcourant le dispositif détectée par un capteur (9), et un élément thermostatique (8) de sécurité situé au moins partiellement dans le même courant de fluide et comportant une partie mobile (81) adaptée pour actionner en translation l'obturateur lorsque par suite d'une défaillance celui-ci n'a pas été actionné par l'accouplement à système vis-écrou et la température dudit courant de fluide dépasse d'une valeur prédéterminée celle qui aurait dû provoquer un tel actionnement par le système vis-écrou, **caractérisé en ce que** le moteur (6) est d'un type présentant au repos un couple résistant de manière à permettre le maintien d'une position de régulation, l'accouplement (7) à système vis-écrou (71) est substantiellement inélastique et le système vis-écrou est réversible afin qu'en cas d'actionnement en translation de l'obturateur (2 ; 2') par la partie mobile (81) de l'élément thermostatique (8), le mouvement de translation soit transmis par l'obturateur au système vis-écrou et provoque une rotation du moteur (6).

2. Dispositif thermostatique selon la revendication 1, en ce que le moteur (6) est un moteur électrique d'un type qui est alimenté électriquement au repos pour présenter alors un couple résistant notablement supérieur à celui dû aux frottements, par exemple un moteur pas-à-pas ou un moteur sans collecteur dit « moteur brushless ».

3. Dispositif thermostatique selon la revendication 1, **caractérisé en ce que** le moteur (6) est un moteur pas-à-pas équipé de moyens de codage de position.

4. Dispositif thermostatique selon la revendication 1, **caractérisé en ce que** la valeur prédéterminée est environ 5°C.

5. Dispositif thermostatique selon la revendication 1, **caractérisé en ce qu'**il comporte un boîtier (1) et une base (1') fixés l'un à l'autre, la base (1') comportant un conduit (14) dans lequel débouche un accès (44) de la chambre qui n'est pas obturable et où sont situés au moins partiellement un capteur (9) et une partie fixe (80) de l'élément thermostatique (8).

6. Dispositif thermostatique selon la revendication 1, **caractérisé en ce que** la chambre (10) comporte deux accès (41, 43) obturables par un obturateur (2) constitué par un boisseau actionné sélectivement dans un sens où il obture progressivement l'un des accès en dégageant progressivement l'autre et inversement.

7. Dispositif thermostatique selon la revendication 6, **caractérisé en ce qu'**il comporte en outre deux accès (42, 44) qui ne sont pas obturables par l'obturateur (2) et qui sont en communication de manière permanente.

8. Dispositif thermostatique selon la revendication 1, **caractérisé en ce que** la chambre (10) comporte deux accès (41, 44) dont l'un est obturable par un obturateur (2') constitué par un clapet actionné sélectivement dans un sens où il obture progressivement l'un des accès et inversement.

9. Dispositif thermostatique selon la revendication 8, **caractérisé en ce qu'**il comporte un boîtier (1) et une base (1') fixés l'un à l'autre, la base (1') comportant un conduit (14) dans lequel débouche un accès (44) de la chambre qui n'est pas obturable et dans la paroi latérale duquel débouche un accès supplémentaire (43) qui n'est également pas obturable.

10. Dispositif thermostatique selon la revendication 9, **caractérisé en ce que** l'élément thermostatique (8) comporte une coupelle (80) à laquelle est solidarisé un clapet (87) d'étanchéité de bipasse, et la base (1') comporte intérieurement une chambre (10') où débouche un accès de bipasse (12') et qui est reliée à la région interne du conduit (14) par un siège (11') pour le clapet (87) d'étanchéité de bipasse lequel est en position de plus grande ouverture quand l'obturateur (2') est en position de fermeture et en position de fermeture quand le capteur (9) détecte une température très élevée.

## Patentansprüche

1. Thermostatvorrichtung, umfassend ein Gehäuse (1), das eine Kammer (10) besitzt, die mindestens zwei Fluidzugänge (41, 42, 43, 44; 41, 44) aufweist, von denen mindestens einer durch ein Absperrorgan (2; 2') verschließbar ist, einen an dem Gehäuse befestigten Motor (6), der mit einer drehbeweglichen Ausgangswelle mit umkehrbarer Drehrichtung versehen ist, die mit dem Absperrorgan über eine Kupplung (7) mit Schrauben-Mutter-System (71) mechanisch verbunden ist, die dafür ausgelegt ist, das Absperrorgan wahlweise in einer Richtung bzgl. Translation zu betätigen, in der es den verschließbaren Zugang (41) allmählich verschließt, sowie in einer Richtung, in der es ihn allmählich in Abhängigkeit von der durch einen Fühler (9) erfassten Temperatur eines die Vorrichtung durchfließenden Fluidstroms freilegt, und ein Sicherheitsthermostatelement (8), das mindestens teilweise in demselben Fluidstrom gelegen ist und einen beweglichen Teil (81) besitzt, der dafür ausgelegt ist, das Absperrorgan bzgl. Translation zu betätigen, wenn dieses infolge einer Störung nicht durch die Kupplung mit Schrauben-Mutter-System betätigt worden war und die Temperatur des Fluidstroms einen vorbestimmten Wert überschreitet, der eine solche Betätigung durch das Schrauben-Mutter-System hätte verursachen müssen, **dadurch gekennzeichnet, dass** der Motor (6) von einem Typ ist, der im Ruhezustand ein Widerstandsmoment besitzt, so dass er den Halt einer Regelstellung gestattet, die Kupplung (7) mit Schrauben-Mutter-System (71) im wesentlichen unelastisch ist und das Schrauben-Mutter-System reversibel ist, damit im Fall der Betätigung des Absperrorgans (2; 2') bzgl. Translation durch den beweglichen Teil des Thermostatelements (8) die Translationsbewegung durch das Absperrorgan auf das Schrauben-Mutter-System übertragen wird und eine Drehung des Motors (6) bewirkt.

2. Thermostatvorrichtung nach Anspruch 1, **dadurch gekennzeichnet, dass** der Motor (6) ein Elektromotor von dem Typ ist, der im Ruhezustand elektrisch versorgt wird, um dabei ein Widerstandsmoment aufzuweisen, das beträchtlich höher als das durch die Reibungen erzeugte Moment ist, beispielsweise ein Schrittmotor oder ein Brushless-Motor genannter Motor ohne Kollektor.

3. Thermostatvorrichtung nach Anspruch 1, **dadurch gekennzeichnet, dass** der Motor ein mit Stellungskodierungsmitteln ausgerüsteter Schrittmotor ist.

4. Thermostatvorrichtung nach Anspruch 1, **dadurch gekennzeichnet, dass** der vorbestimmte Wert etwa 5°C beträgt.

5. Thermostatvorrichtung nach Anspruch 1, **dadurch gekennzeichnet, dass** sie ein Gehäuse (1) und einen Sockel (1') aufweist, die aneinander befestigt sind, wobei der Sockel (1') eine Leitung (14) aufweist, in die ein Zugang (44) der Kammer mündet, der nicht verschließbar ist, und in der mindestens teilweise ein Fühler (9) und ein feststehender Teil (80) des Thermostatelements (8) gelegen sind.

6. Thermostatvorrichtung nach Anspruch 1, **dadurch gekennzeichnet, dass** die Kammer (10) zwei Zugänge (41, 43) aufweist, die durch ein Absperrorgan (2) verschließbar sind, das aus einem Küken besteht, das wahlweise in einer Richtung betätigt wird, in der es einen der Zugänge allmählich verschließt, indem es den anderen allmählich freilegt, und umgekehrt.

7. Thermostatvorrichtung nach Anspruch 6, **dadurch gekennzeichnet, dass** sie außerdem zwei Zugänge (42, 44) aufweist, die nicht durch das Absperrorgan (2) verschließbar sind und die ständig in Verbindung sind.

8. Thermostatvorrichtung nach Anspruch 1, **dadurch gekennzeichnet, dass** die Kammer (10) zwei Zugänge (41, 44) aufweist, von denen einer durch Absperrorgan (2') verschließbar ist, das aus einem Ventil besteht, das wahlweise in einer Richtung betätigt wird, in der es einen der Zugänge allmählich verschließt und umgekehrt.

9. Thermostatvorrichtung nach Anspruch 8, **dadurch gekennzeichnet, dass** sie ein Gehäuse (1) und einen Sockel (1') aufweist, die aneinander befestigt sind, wobei der Sockel (1') eine Leitung (14) aufweist, in die ein Zugang (44) der Kammer mündet, der nicht verschließbar ist, und in deren Seitenwand ein zusätzlicher Zugang (43) ausmündet, der ebenfalls nicht verschließbar ist.

10. Thermostatvorrichtung nach Anspruch 9, **dadurch gekennzeichnet, dass** das Thermostatelement (8) einen Napf (80) besitzt, mit dem ein Bypass-Dichtungsventil (87) fest verbunden ist, und der Sockel (1') innen eine Kammer (10') aufweist, in der ein Bypass-Zugang (12') ausmündet und die mit dem inneren Bereich der Leitung (14) über einen Sitz (11') für das Bypass-Dichtungsventil (87) verbunden ist, das in der Stellung größter Öffnung ist, wenn das Absperrorgan (2') in Verschlussstellung ist, und in Verschlussstellung, wenn der Fühler (9) eine sehr hohe Temperatur erfasst.

## Claims

1. Thermostat device consisting of a casing (1) having a chamber (10) comprising at least two liquid access points (41, 42, 43, 44,; 41, 44), of which at least one can be blanked off by a shutter (2, 2'), a motor (6) fixed to the casing and fitted with a mobile output shaft, which can rotate in both directions and which is mechanically linked to the shutter by a screw/nut (71) coupling system (7), adapted to actuate this shutter by translation, selectively in one direction where it gradually seals the access being blocked (41) and in another direction where it gradually releases the seal in relation to the temperature of a flow of liquid through the device being detected by a sensor (9), and a thermostat safety element (8) located at least partially in the same flow of liquid and comprising a mobile section (81) that is adapted to actuate by translation, the shutter which, as a result of a failure, was not actuated by the screw/nut coupling system and where the temperature of said liquid flow exceeded a predetermined value, which should have led to such actuation by the screw/nut system, **characterised in that** the motor (6) is of a type which at rest, has a load moment so as to maintain a control position, the screw/nut system (71) coupling (7) is substantially inflexible and the screw/nut system is reversible so that where the shutter (2; 2') is actuated by translation by the mobile section (81) of the thermostat element (8), the translation movement is transmitted by the shutter to the screw/nut system, thereby causing the motor (6) to rotate.

2. Thermostat device according to claim 1, **characterised in that** the motor (6) is an electric motor of the type that is electrically supplied at rest to produce a load moment considerably greater than that caused by friction, for example a stepping motor or brushless motor.

3. Thermostat device according to claim 1, **characterised in that** the motor (6) is a stepping motor fitted with the means of position encoding.

4. Thermostat device according to claim 1, **characterised in that** the predetermined value is around 5°C.

5. Thermostat device according to claim 1, **characterised in that** it comprises a casing (1) and a base (1') attached to each other, with the base (1') comprising a pipe (14) which opens out to provide an access (44) to the chamber which cannot be sealed and where are located at least partially, a sensor (9) and a fixed section (80) of the thermostat (8).

6. Thermostat device according to claim 1, **characterised in that** the chamber (10) comprises two accesses (41, 43) that can be sealed with a shutter (2) comprising a plug that is actuated selectively in a direction where it gradually blocks one of the two accesses by gradually opening the other and the other way round.

7. Thermostat device according to claim 6, **characterised in that** it comprises two accesses (42, 44) which are not blocked by the shutter (2) and are permanently open.

8. Thermostat device according to claim 1, **characterised in that** the chamber (10) comprises two accesses (41, 44), of which one can be sealed by a shutter (2') comprising a valve that is selectively actuated in a direction where it gradually blanks off one of the accesses and the other way round.

9. Thermostatic device according to claim 8, **characterised in that** it comprises a casing (1) and a base (1') attached to one another, with the base (1') comprising a pipe (14) which opens out to provide an access (44) to the chamber which cannot be sealed and where the side wall opens out to provide an additional access (43), which likewise, cannot be sealed.

10. Thermostat device according to claim 9, **characterised in that** the thermostat (8) comprises a cup (80) forming an integral part with a sealed by-pass valve (87) and where the base (1') also comprises in the inside, a chamber (10') which provides a by-pass access (12'), which is connected to the internal section of the pipe (14) by a seat (11') for the sealed by-pass valve (87), which is in the fully open position when the shutter (2') is in the closed position and in the closed position when the sensor (9) detects a very high temperature.
